# EUROPÄISCHE PATENTSCHRIFT

(11) **EP 1 144 210 B1**
(45) Veröffentlichungstag und Bekanntmachung des Hinweises auf die Patenterteilung: **23.11.2005**
(21) Anmeldenummer: 00982967.2
(22) Anmeldetag: 06.10.2000
(51) Int. Cl.: F16F 9/05, B60G 15/12

(54) **LUFTFEDERANORDNUNG**
PNEUMATIC SUSPENSION
SYSTEME D'AMORTISSEUR PNEUMATIQUE

(30) Priorität: 15.10.1999 DE 19949995
(43) Veröffentlichungstag der Anmeldung: 17.10.2001
(73) Patentinhaber: Carl Freudenberg KG, 69469 Weinheim (DE)
(72) Erfinder: LÜHMANN, Cord, 21614 Buxtehude (DE); HÖPPNER, Thorsten, 22459 Hamburg (DE); JURK, Oliver, 22089 Hamburg (DE)
(74) Vertreter: Mattausch, Klaus
(86) Internationale Anmeldenummer: PCT/DE2000/003526
(87) Internationale Veröffentlichungsnummer: WO 2001/026921

(56) Entgegenhaltungen:
- DE-A- 2 064 751
- DE-A- 19 614 476
- DE-A- 19 704 434
- DE-A- 19 753 637
- DE-U- 29 823 508
- US-A- 4 722 516
- US-A- 4 934 667
- US-A- 5 460 354

## Beschreibung

Die Erfindung betrifft eine Luftfederanordnung gemäß Oberbegriff des Patentanspruches 1.

Eine gattungsgemäße Luftfederanordnung mit Luftfederdeckel, Luftfederkolben und Luftfederbalg als wesentliche Bauteile des Luftfedermoduls ist beispielsweise in den Druckschriften DE-C-195 08 980 und DE-A-197 53 637 beschrieben, und zwar unter Verwendung eines Schwingungsdämpfers (Stoßdämpfers), der wiederum mit einer Fahrwerkanbindung in Kontakt steht.

Der Luftfederbalg aus elastomerem Werkstoff, der unter Bildung einer Luftfederschlaufe an der Abrollfläche des Luftfederkolbens abrollen kann, ist mit einem eingebetteten Festigkeitsträger in Form eines Axialbalges (DE-A-36 43 073) versehen, wobei bei Verwendung eines Axialbalges eine Außenführung vorhanden ist.

Im Rahmen einer Weiterentwicklung besteht nun die Aufgabe der Erfindung darin, eine Luftfederanordnung bereitzustellen, bei dem der Luftfederbalg am Luftfederdeckel so angebunden ist, daß Raumbewegungen des Fahrwerkanbindungspunktes des Luftfedermoduls ohne Auftreten von Rückstellmomenten ermöglicht werden.

Gelöst wird diese Aufgabe mit den Merkmalen des Patentanspruches 1.

Zweckmäßige Ausgestattungen bzw. eine Verwendung der Erfindung sind in den Patentansprüchen 2 bis 18 genannt.

Die Erfindung wird nun anhand von Ausführungsbeispielen unter Bezugnahme auf schematische Zeichnungen erläutert. Es zeigen:
- Fig. 1: eine Luftfederanordnung in zwei Varianten, nämlich mit Axialbalg und Außenführung gemäß der Erfindung sowie mit Kreuzlagenbalg ohne Außenführung (gestrichelte Linienführung) nicht in Einklang mit der Erfindung;
- Fig. 2 bis 6: jeweils Detailansicht eines Stützlagers in fünf Ausführungsformen in bezug auf einen Axialbalg mit Außenführung.

In Verbindung mit diesen Figuren gilt folgende Bezugsziffernliste:
- **1**: Luftfederanordnung
- **2**: Luftfederdeckel (Luftfedertopf, Druckbehälter)
- **3**: Luftfederkolben (Abrollkolben, Tauchkolben)
- **4**: Stirnbereich des Luftfederkolbens
- **5**: Abrollfläche des Luftfederkolbens
- **6**: Endbereich des Luftfederkolbens
- **7**: Luftfederbalg (Axialbalg)
- **7'**: Luftfederbalg (Kreuzlagenbalg)
- **8**: erste Luftfederschlaufe (Rollfalte)
- **9**: Luftfederinnenraum
- 10: Außenführung
- **11**: Schwingungsdämpfer
- **12**: Behälterrohr
- **13**: Kolbenstange
- **14**: Dämpferlager
- **15**: Anschlagpuffer
- **16**: dichtende Verbindung
- **17**: Rolldichtung
- **18**: Rucksackmodul (ADS-Modul)
- **19**: Fahrwerkanbindung
- **20**: Anbindungspunkt zum Behälterrohr
- **21**: Fahrwerkanbindungspunkt
- **22**: gelenkiges Bauteil unter Bildung einer zweiten Schlaufe für den Axialbalg
- **22'**: gelenkiges Bauteil unter Bildung einer zweiten Schlaufe für den Kreuzlagenbalg
- **23**: Ende des Luftfederbalges (Axialbalg) im Bereich des Luftfederdeckels
- **24**: Stützlager
- **24'**: Stützlager
- **24"**: Stützlager
- **24'"**: Stützlager
- **25**: erstes Ende des Stützlagers
- **26**: zweites Ende des Stützlagers
- **27**: gemeinsame Kontakfläche von Luftfederbalg und Stützlager
- **28**: Befestigungsmittel am Luftfederdeckel
- **29**: Endflansch der Außenführung
- **30**: Befestigungsmittel für das zweite Ende des Stützlagers
- **31**: aufgelegter Festigkeitsträger in Form eines textilen Werkstoffes
- **32**: Innenende des Stützlagers
- **33**: Außenende des Stützlagers
- **34**: Außennut des Stützlagers
- **35**: aufgelegter Festigkeitsträger in Form eines ringförmigen Stützelementes

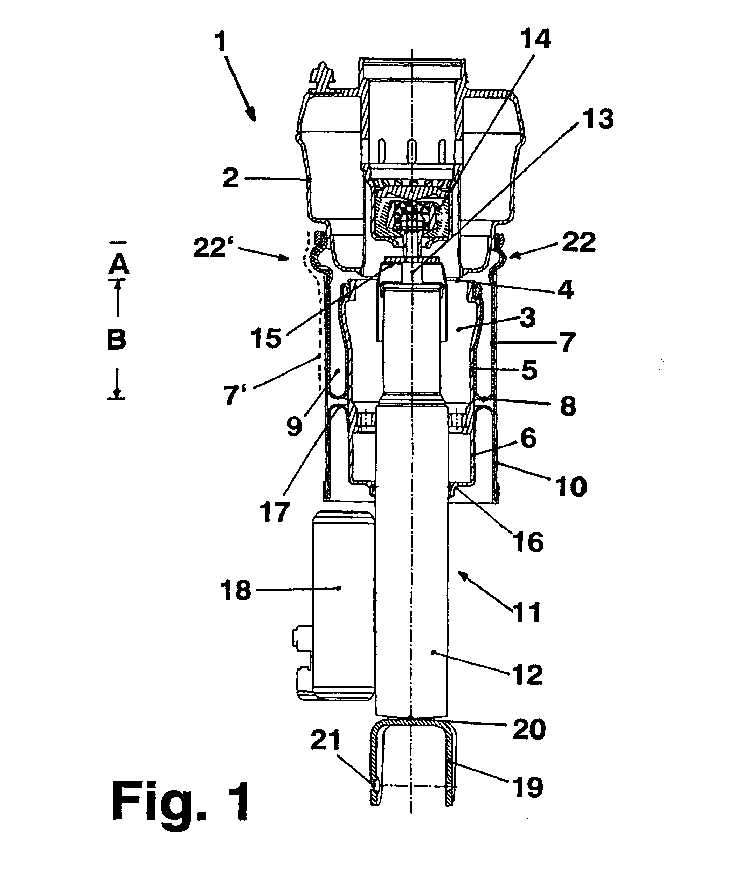

Fig. 1 zeigt eine Luftfederanordnung **1** für eine Kfz-Vorderachse. Die wesentlichen Bauteile des Luftfedermoduls sind der topfförmige Luftfederdeckel **2** mit Anbindungsmöglichkeiten für die Karosserie, der Luftfederkolben **3,** dessen Stirnbereich **4** dem Luftfederdeckel gegenüberliegend angeordnet ist, sowie der Luftfederbalg **7** bzw. **7'.** Der Luftfederbalg verbindet dabei den Luftfederdeckel und Luftfederkolben unter Verwendung von Befestigungsmitteln (z.B. Spannelemente), und zwar unter Umschließung eines volumenelastischen Luftfederinnenraumes **9.** Beim Einfedern des Luftfederbalges bildet sich eine erste Luftfederschlaufe **8,** die an der Abrollfläche **5** des Luftfederkolbens abrollen kann.

Der Luftfederbalg ist zumeist mit einem eingebetteten Festigkeitsträger in Form eines Axial- oder Kreuzlagenbalges versehen. Die Luftfederanordnung **1** beinhaltet dabei zwei Ausführungsbeispiele, nämlich einen Axialbalg **7** mit Außenführung **10** sowie einen Kreuzlagenbalg **7'** (gestrichelte Linienführung) ohne Außenführung.

Ferner weist die Luftfederanordnung **1** einen Schwingungsdämpfer **11** auf, der ein Behälterrohr **12** und eine Kolbenstange **13** umfaßt. Die Kolbenstange ist dabei fest mit dem Kernbereich des Luftfederdeckels **2** bzw. mit dem Dämpferlager **14** verbunden und taucht gleitend in das Behälterrohr ein. Der Schwingungsdämpfer **11** ist zudem mit einem Anschlagpuffer **15** ausgestattet, der zugleich den Kopfbereich des Behälterrohres **12** kammert.

Das Behälterrohr **12** des Schwingungsdämpfers **11** ist abschnittsweise vom Luftfederkolben **3** umgeben und weist dabei einen seitlichen Anbindungsbereich auf, der mit dem Endbereich **6** des Luftfederkolbens **3** eine dichtende Verbindung **16** bildet.

Innerhalb des freien Bereiches des Behälterrohres **12** des Schwingungsdämpfers **11** ist zumeist ein Rücksackmodul **18,** insbesondere in Form eines ADS-Moduls (Adaptive Damping System), vorhanden, das über die äußere Peripherie des Endbereiches **6** des Luftfederkolbens **3** hinausragt.

Um zu verhindern, daß Verunreinigungen in den dynamischen Bereich des Luftfederbalges **7** gelangen, befindet sich in bezug auf das Ausführungsbeispiel des Axialbalges mit Außenführung zwischen dem Endbereich **6** des Luftfederkolbens **3** und der Außenführung **10** eine Rolldichtung **17.** Anstelle der Rolldichtung kann auch eine Schutzmanschette (DE-A-197 53 637) verwendet werden.

Die Luftfederanordnung **1** weist schließlich eine Fahrwerkanbindung **19** auf, und zwar umfassend einen Anbindungspunkt **20** zum Behälterrohr **12** des Schwingungsdämpfers **11** sowie einen Fahrwerkanbindungspunkt **21.**

In Verbindung mit der eingangs genannten Aufgabenstellung zeichnet sich nun die erfindungsgemäße Luftfederanordnung **1** dadurch aus, daß im näheren Bereich **A** der Anbindung des Luftfederbalges **7** bzw. **7'** am Luftfederdeckel **2** ein gelenkiges Bauteil **22** bzw. **22'** angebracht ist, das unter Druck Schwenkbewegungen zuläßt, und zwar unter Bildung einer zweiten Luftfederschlaufe, die sich im wesentlichen in radialer Richtung erstreckt. Innerhalb des übrigen Balgbereiches **B** weist der Luftfederbalg lediglich die übliche Rollfalte **8** auf.

Das gelenkige Bauteil **22** bzw. **22'** wird nun anhand mehrerer Ausführungsbeispiele im folgenden näher erläutert.

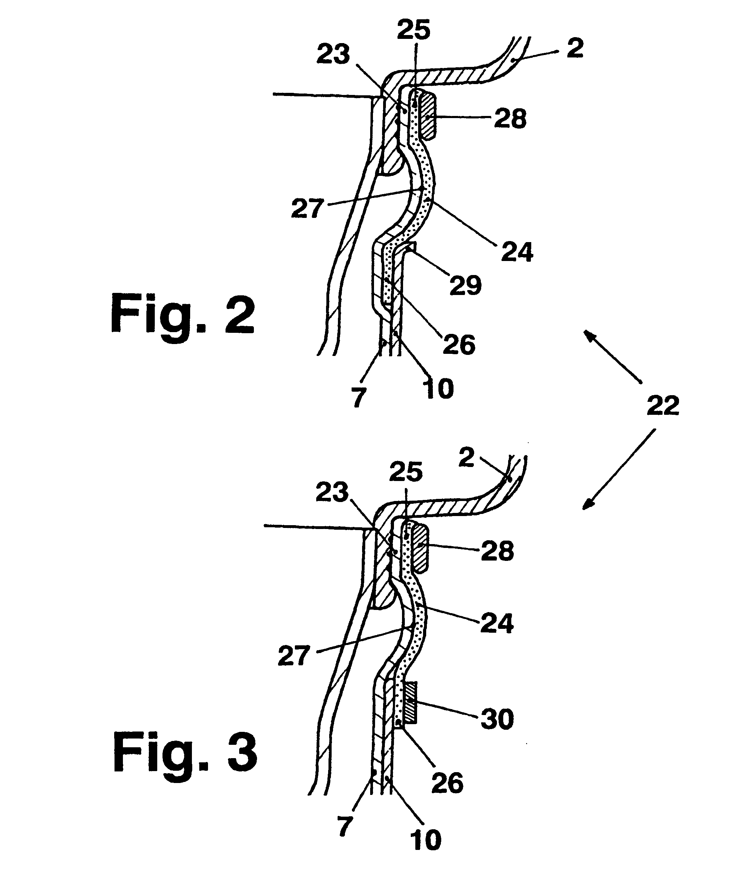

Die Fig. 2 bis 6 zeigen den Luftfederbalg **7** in Form eines Axialbalges, der über seinen gesamten Bereich **A** und **B** (Fig. 1) einschließlich des Befestigungsbereiches an den beiden Balgenden einen Festigkeitsträger in Form axial verlaufender Verstärkungsfäden aufweist. Auf diesbezügliche Details wird beispielsweise auf die Druckschrift DE-A-36 43 073 verwiesen.

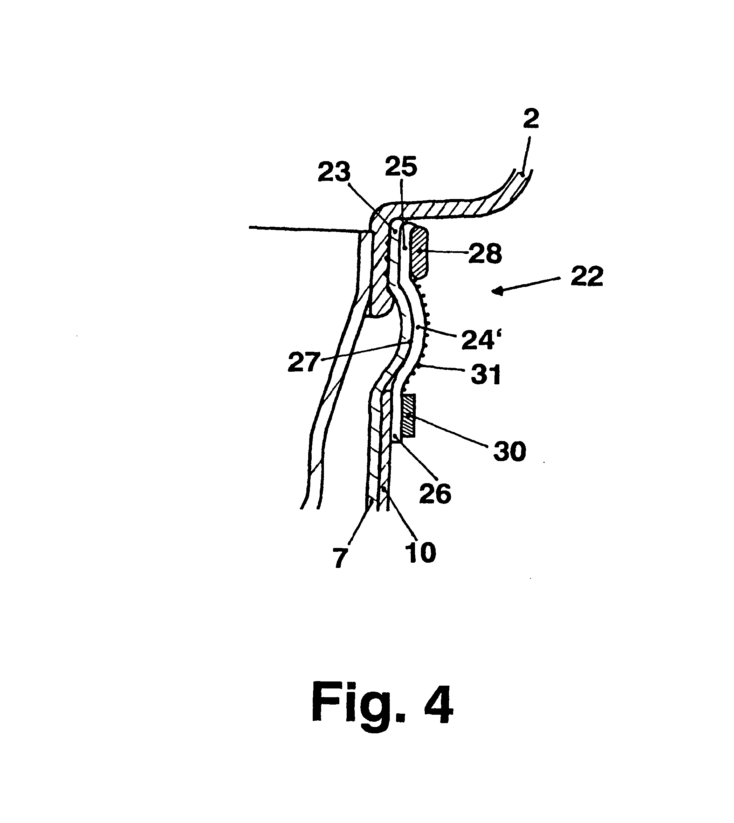

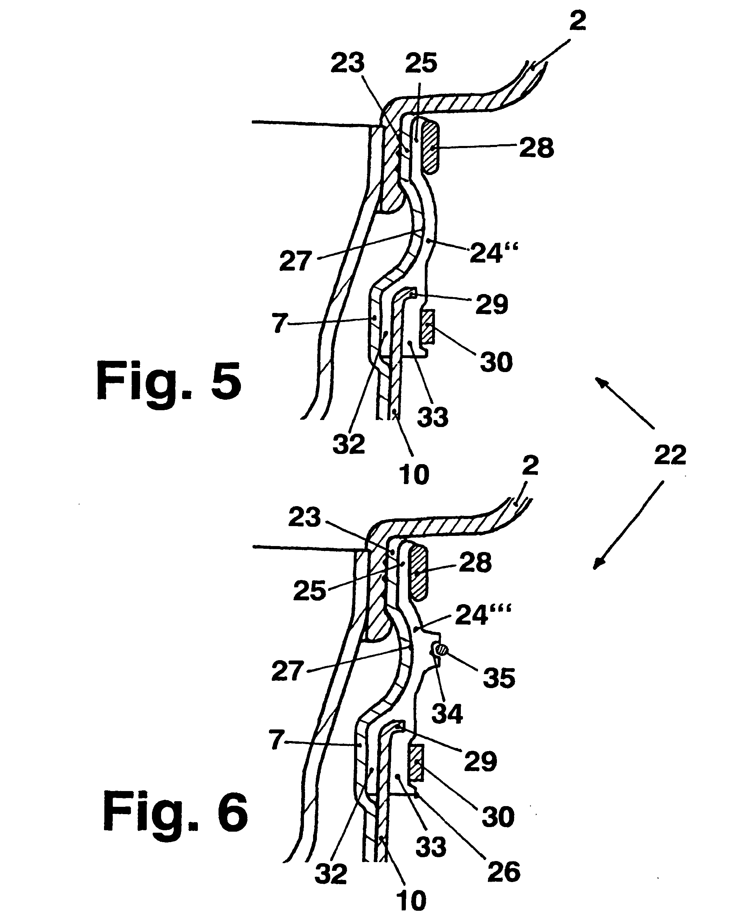

Das gelenkige Bauteil **22** umfaßt den Luftfederbalg 7 und ein innerhalb des Gelenkbereiches **A** (Fig. 1) an der Außenwand des Luftfederbalges angeordnetes umlaufendes Stützlager **24** (Fig. 2, 3), **24'** (Fig. 4), **24"** (Fig. 5) bzw. **24'"** (Fig. 6) mit den beiden Stützlagerenden **25** und **26**. Das Stützlager besteht dabei aus einem Werkstoff, der neben der Gelenkfunktion auch eine Ausdehnungsbegrenzung gewährleistet. Auf diese Weise wird verhindert, daß sich der Axialbalg unter Druck bis zum Ausfall dehnen würde. Hinsichtlich des Werkstoffes des Stützlagers kommen insbesondere folgende Varianten zum Einsatz:
- Es besteht ausschließlich aus einem elastomerem Werkstoff oder einem thermoplastischen Elastomeren (TPE), beispielsweise in Form eines Gummiformteiles (Fig. 5).
- Es besteht ausschließlich aus einem textilen Werkstoff, vorzugsweise in Form eines Gewebes (Fig. 2, 3).
- Es besteht aus einem elastomerem Werkstoff oder einem thermoplastischen Elastomeren, der einen außenseitig aufgelegten Festigkeitsträger aufweist, beispielsweise in Form eines Gummiformteiles mit einem Festigkeitsträger **31** aus einem textilen Werkstoff (Fig. 4) oder einem ringförmigen Stützelement **35,** das in einer Außennut **34** des Stützlagers **24'"** einsitzt (Fig. 6).

Der Luftfederbalg **7** und das Stützlager **24, 24', 24"** bzw. **24'"** bilden einen Gesamtverbund, dessen gemeinsame Kontaktfläche **27** haftfrei ist.

Das Ende **23** des Luftfederbalges **7** und das erste Ende **25** des Stützlagers **24, 24', 24"** bzw. **24"'** werden mit einem einzigen Befestigungsmittel **28,** beispielsweise mittels eines Spannelementes, am Luftfederdeckel **2** verankert.

Hinsichtlich der Befestigung des zweiten Endes **26** des Stützlagers **24, 24', 24"** bzw. **24'"** gibt es verschiedene Ausführungsvarianten, die im folgenden näher vorgestellt werden:
- Die Außenführung **10** ist gleichzeitig das Befestigungsmittel für das zweite Ende **26** des Stützlagers **24,** indem das diesbezügliche Stützlagerende bei Druckbeaufschlagung zwischen dem Luftfederbalg **7** und der Außenführung **10** eingespannt ist, vorzugsweise in Verbindung mit einem nach außen gerichteten Endflansch **29** der Außenführung (Fig. 2).
- Das zweite Ende **26** des Stützlagers **24** bzw. **24'** wird unter Verwendung eines zusätzlichen Befestigungsmittels **30,** beispielsweise mittels eines Spannelementes, an der Außenführung **10** befestigt, und zwar derart, daß das diesbezügliche Stützlagerende ausschließlich zwischen dem Befestigungsmittel **30** und der Außenführung **10** zu liegen kommt (Fig. 3, 4).
- Das zweite Ende **26** des Stützlagers **24"** bzw. **24'"** weist eine umlaufende schlitzförmige Aussparung für die Aufnahme der Außenführung **10** auf, und zwar unter Bildung eines Innenendes **32** und Außenendes **33,** wobei sich das Innenende zwischen dem Luftfederbalg **7** und der Außenführung **10** befindet, während das Außenende zwischen der Außenführung und dem Befestigungsmittel **30** zu liegen kommt, vorzugsweise in Verbindung mit einem nach außen gerichteten Endflansch **29** der Außenführung (Fig. 5, 6).

Die Luftfederanordnung **1** gemäß Fig. 1 zeigt einen Luftfederbalg **7'** in Form eines Kreuzlagenbalges (gestrichelte Linienführung). Dabei weist der Luftfederbalg innerhalb des Balgbereiches **B** den üblichen Festigkeitsträger mit gekreuzten Fadenverstärkungen auf. Hinsichtlich diesbezüglicher Details wird beispielsweise auf die Druckschrift DE-A-29 04 522 verwiesen.

Im Rahmen eines einstückigen Gesamtverbundes von Luftfederbalg **7'** und dem gelenkigen Bauteil **22'** ist der Gelenkbereich **A** gegenüber dem übrigen Balgbereich **B** anders aufgebaut, vorzugsweise in Verbindung mit einem anderen Festigkeitsträgeraufbau. Das gelenkige Bauteil **22'** weist dabei einen eingebetteten und/oder außenseitig aufgelegten Festigkeitsträger auf, der vorzugsweise aus einem textilen Werkstoff in gewendelter, gewebter oder gestrickter Form besteht. Auf die Außenführung kann hier verzichtet werden.

## Patentansprüche

1. Luftfederanordnung (1), bestehend aus wenigstens folgenden Bauteilen, nämlich: einem topfförmigen Luftfederdeckel (2), in dessen Kernbereich vorzugsweise ein Dämpferlager (14) integriert ist; einem Luftfederkolben (3) umfassend einen Stirnbereich (4), der dem Luftfederdeckel (2) gegenüberliegend angeordnet ist, eine seitliche Abrollfläche (5) und einen Endbereich (6), der dem Stirnbereich (4) am weitesten entfernt ist; einem Luftfederbalg (7) aus elastomerem Werkstoff, der den Luftfederdeckel (2) und Luftfederkolben (3) unter Verwendung von Befestigungsmitteln miteinander verbindet und dabei einen volumenelastischen Luftfederinnenraum (9) umschließt, wobei der Luftfederbalg unter Bildung einer ersten Luftfederschlaufe (8) an der Abrollfläche (5) des Luftfederkolbens (3) abrollen kann, wobei ferner der Luftfederbalg mit einem eingearbeiteten Festigkeitsträger in Form eines Axialbalgs (7) versehen ist, wobei eine Außenführung (10) vorhanden ist; einem Schwingungsdämpfer (11) umfassend ein Behälterrohr (12), das zumindest abschnittsweise vom Luftfederkolben (3) umgeben ist und einen seitlichen Anbindungsbereich aufweist, der mit dem Endbereich (6) des Luftfederkolbens (3) eine dichtende Verbindung (16) bildet; sowie eine Kolbenstange (13), die fest mit dem Kernbereich des Luftfederdeckels (2) bzw. dem Dämpferlager (14) verbunden ist und gleitend in das Behälterrohr (12) eintaucht; einer Fahrwerkanbindung (19) mit Anbindungspunkten (20, 21) zum Behälterrohr (12) des Schwingungsdämpfers (11) einerseits und zum Fahrwerk andererseits, **dadurch gekennzeichnet, dass** im näheren Bereich (A) der Anbindung des Luftfederbalgs (7) am Luftfederdeckel (2) ein gelenkiges Bauteil (22) angebracht ist, das unter Druck Schwenkbewegungen zulässt und zwar unter Bildung einer zweiten Luftfederschlaufe, die sich im Wesentlichen in radialer Richtung erstreckt und dass das gelenkige Bauteil (22) den Luftfederbalg (7) und ein innerhalb des Gelenkbereiches (A) an der Außenwand des Luftfederbalgs angeordnetes umlaufendes Stützlager (24, 24', 24", 24'") umfasst, das aus einem Werkstoff besteht, der neben der Gelenkfunktion auch eine Ausdehnungsbegrenzung gewährleistet.

2. Luftfederanordnung nach Anspruch 1, **dadurch gekennzeichnet, dass** das Stützlager (24") ausschließlich aus einem elastomeren Werkstoff oder einem thermoplastischen Elastomer besteht.

3. Luftfederanordnung nach Anspruch 1, **dadurch gekennzeichnet, dass** das Stützlager (24) ausschließlich aus einem textilen Werkstoff besteht, vorzugsweise in Form eines Gewebes.

4. Luftfederanordnung nach Anspruch 1, **dadurch gekennzeichnet, dass** das Stützlager aus einem elastomeren Werkstoff oder einem thermoplastischen Elastomer besteht, der einen eingebetteten Festigkeitsträger, vorzugsweise aus einem textilen Werkstoff, aufweist.

5. Luftfederanordnung nach Anspruch 1, **dadurch gekennzeichnet, dass** das Stützlager (24', 24"') aus einem elastomeren Werkstoff oder einem thermoplastischen Elastomer besteht, der einen außenseitig aufgelegten Festigkeitsträger (31, 35) aufweist.

6. Luftfederanordnung nach Anspruch 5, **dadurch gekennzeichnet, dass** der aufgelegte Festigkeitsträger (31) aus einem textilen Werkstoff besteht.

7. Luftfederanordnung nach Anspruch 4 oder 6, **dadurch gekennzeichnet, dass** der textile Werkstoff in gekreuzter, gewendelter, gewebter oder gestrickter Form vorliegt.

8. Luftfederanordnung nach Anspruch 5, **dadurch gekennzeichnet, dass** der aufgelegte Festigkeitskörper (35) ein ringförmiges Stützelement ist.

9. Luftfederanordnung nach Anspruch 8, **dadurch gekennzeichnet, dass** das Stützelement (35) aus Metall oder Kunststoff besteht.

10. Luftfederanordnung nach Anspruch 8 oder 9, **dadurch gekennzeichnet, dass** sich das Stützelement (35) in einer umlaufenden Außennut (34) des Stützlagers (24'") befindet.

11. Luftfederanordnung nach einem der Ansprüche 1 bis 10, **dadurch gekennzeichnet, dass** der Luftfederbalg (7) und das Stützlager (24, 24', 24", 24 ,") einen Gesamtverbund bilden, dessen gemeinsame Kontaktfläche (27) haftfrei ist.

12. Luftfederanordnung nach einem der Ansprüche 1 bis 11, **dadurch gekennzeichnet, dass** das Befestigungsmittel (28) für das Ende (23) des Luftfederbalges (7) am Luftfederdeckel (2) gleichzeitig das Befestigungsmittel für das erste Ende (25) des Stützlagers (24, 24', 24", 24'") ist.

13. Luftfederanordnung nach Anspruch 1, **dadurch gekennzeichnet, dass** die Außenführung (10) gleichzeitig das Befestigungsmittel für das zweite Ende (26) des Stützlagers (24) ist, indem das diesbezügliche Stützlagerende bei Druckbeaufschlagung zwischen dem Luftfederbalg (7) und der Außenführung eingespannt ist.

14. Luftfederanordnung nach Anspruch 1, dass das zweite Ende (26) des Stützlagers **(24, 24', 24", 24'")** unter Verwendung eines zusätzlichen Befestigungsmittels (30) an der Außenführung (10) befestigt ist.

15. Luftfederanordnung nach Anspruch 14, **dadurch gekennzeichnet, dass** das zweite Ende (26) des Stützlagers (24, 24') ausschließlich zwischen dem zusätzlichen Befestigungsmittel (30) und der Außenführung (10) zu liegen kommt.

16. Luftfederanordnung nach Anspruch 14, **dadurch gekennzeichnet, dass** das zweite Ende (26) des Stützlagers (24", 24'") eine umlaufende schlitzförmige Aussparung für die Aufnahme der Außenführung (10) aufweist und zwar unter Bildung eines Innenendes (32) und Außenendes (33), wobei sich das Innenende zwischen dem Ludtfederbalg (7) und der Außenführung (10) befindet, während das Außenende zwischen der Außenführung und dem zusätzlichen Befestigungsmittel (30) zu liegen kommt.

17. Luftfederanordnung nach einem der Ansprüche 13 bis 16, **dadurch gekennzeichnet, dass** die Außenführung (10) im Bereich der Befestigung des zweiten Endes (26) des Stützlagers (24, 24", 24'") einen nach außen gerichteten Endflansch (29) aufweist.

18. Verwendung der Luftfederanordnung nach einem der Ansprüche 1 bis 17 für die Vorderachse eines Kraftfahrzeugs.

## Claims

1. Pneumatic spring arrangement (1), composed of at least the following components, specifically: a pot-shaped pneumatic spring lid (2) in whose core region preferably an absorber bearing (14) is integrated; a pneumatic spring piston (3) comprising a front region (4) which is arranged opposite the pneumatic spring lid (2), a lateral rolling face (5) and an end region (6) which is furthest away from the front region (4); a pneumatic spring bellows (7) made of elastomer material which connects the pneumatic spring lid (2) and pneumatic spring piston (3) to one another using attachment means and at the same time encloses a pneumatic spring internal space (9) with an elastic volume, wherein the pneumatic spring bellows can roll on the rolling face (5) of the pneumatic spring piston (3) so as to form a first pneumatic spring loop (8), wherein the pneumatic spring bellows is additionally provided with an integrated rigidity carrier in the form of an axial bellows (7), wherein an external guide (10) is present; a vibration damper (11) comprising a container pipe (12) which is surrounded at least in certain sections by the pneumatic spring piston (3) and has a lateral connecting region which forms a seal-forming connection (16) with the end region (6) of the pneumatic spring piston (3); and a piston rod (13) which is permanently connected to the core region of the pneumatic spring lid (2) or the absorber bearing (14) and dips in a sliding fashion into the container pipe (12); a chassis connection (19) with connecting points (20, 21) to the container pipe (12) of the vibration damper (11) on the one hand, and to the chassis on the other, **characterized in that** in the relatively near region (A) of the connection of the pneumatic spring bellows (7) to the pneumatic spring lid (2) an articulated component (22) is mounted, which component (22) permits pivoting movements under pressure, specifically while forming a second pneumatic spring loop which extends essentially in the radial direction, and **in that** the articulated component (22) comprises the pneumatic spring bellows (7) and a supporting bearing (24, 24', 24", 24"') which is arranged all around the outer wall of the pneumatic spring bellows inside the articulation region (A) and is composed of a material which ensures both the articulated function and an expansion limitation.

2. Pneumatic spring arrangement according to Claim 1, **characterized in that** the supporting bearing (24") is composed exclusively of an elastomeric material or a thermoplastic elastomer.

3. Pneumatic spring arrangement according to Claim 1, **characterized in that** the supporting bearing (24) is composed exclusively of a textile material, preferably in the form of a nonwoven.

4. Pneumatic spring arrangement according to Claim 1, **characterized in that** the supporting bearing is composed of an elastomer material or a thermoplastic elastomer which has an embedded rigidity carrier, preferably made of a textile material.

5. Pneumatic spring arrangement according to Claim 1, **characterized in that** the supporting bearing (24', 24''') is composed of an elastomeric material or a thermoplastic elastomer which has a rigidity carrier (31, 35) which is fitted on the outside.

6. Pneumatic spring arrangement according to Claim 5, **characterized in that** the fitted-on rigidity carrier (31) is composed of a textile material.

7. Pneumatic spring arrangement according to Claim 4 or 6, **characterized in that** the textile material is present in a crossed over, coiled, woven or knitted form.

8. Pneumatic spring arrangement according to Claim 5, **characterized in that** the fitted-on rigidity body (35) is an annular supporting element.

9. Pneumatic spring arrangement according to Claim 8, **characterized in that** the supporting element (35) is composed of metal or plastic.

10. Pneumatic spring arrangement according to Claim 8 or 9, **characterized in that** the supporting element (35) is located in a circumferential outer groove (34) on the supporting bearing (24"').

11. Pneumatic spring arrangement according to one of Claims 1 to 10, **characterized in that** the pneumatic spring bellows (7) and the supporting bearing (24, 24', 24" , 24"') form an assembly whose common contact face (27) is non stick.

12. Pneumatic spring arrangement according to one of Claims 1 to 11, **characterized in that** the attachment means (28) for the end (23) of the pneumatic spring bellows (7) to the pneumatic spring lid (2) is simultaneously the attachment means for the first end (25) of the supporting bearing (24, 24', 24", 24"').

13. Pneumatic spring arrangement according to Claim 1, **characterized in that** the external guide (10) is simultaneously the attachment means for the second end (26) of the supporting bearing (24) **in that** the relevant end of the supporting bearing is clamped in between the pneumatic spring bellows (7) and the external guide when pressure is applied.

14. Pneumatic spring arrangement according to Claim 1, **characterized in that** the second end (26) of the supporting bearing (24, 24', 24", 24"') is attached to the external guide (10) using an additional attachment means (30).

15. Pneumatic spring arrangement according to Claim 14, **characterized in that** the second end (26) of the supporting bearing (24, 24') comes to rest exclusively between the additional attachment means (30) and the external guide (10).

16. Pneumatic spring arrangement according to Claim 14, **characterized in that** the second end (26) of the supporting bearing (24", 24"') has a circumferential, slot-shaped recess for holding the external guide (10), specifically to form an inner end (32) and outer end (33), wherein the inner end is located between the pneumatic spring bellows (7) and the external guide (10), while the outer end comes to rest between the external guide and the additional attachment means (30).

17. Pneumatic spring arrangement according to one of Claims 13 to 16, **characterized in that** the external guide (10) has an outwardly directed end flange (29) in the region of the attachment of the second end (26) of the supporting bearing (24, 24", 24"').

18. Use of the pneumatic spring arrangement according to one of Claims 1 to 17 for the front axle of a motor vehicle.

## Revendications

1. Système d'amortissement pneumatique (1), constitué au moins des pièces suivantes : un couvercle d'amortisseur pneumatique en forme de pot (2), à la zone centrale duquel est de préférence intégré un support d'amortisseur (14); un piston d'amortisseur pneumatique (3) comprenant une zone frontale (4), qui est agencée face au couvercle d'amortisseur pneumatique (2), une face de roulement latérale (5) et une zone d'extrémité (6), qui est la plus éloignée de la zone frontale (4); un soufflet d'amortisseur pneumatique (7) en matériau élastomère, qui raccorde le couvercle d'amortisseur pneumatique (2) et le piston d'amortisseur pneumatique (3) l'un à l'autre en utilisant des moyens de fixation et qui entoure de la sorte un espace interne d'amortisseur pneumatique au volume élastique (9), dans lequel le soufflet d'amortisseur pneumatique peut rouler, en formant une première boucle d'amortisseur pneumatique (8), sur la face de roulement (5) du piston d'amortisseur pneumatique (3), dans lequel le soufflet d'amortisseur pneumatique est en outre pourvu d'un support de consolidation incorporé sous la forme d'un soufflet axial (7), dans lequel est présente une coulisse externe (10); un amortisseur d'oscillation (11) comprenant un tube réceptacle (12), qui est entouré au moins par sections par le piston d'amortisseur pneumatique (3) et présente une zone de raccordement latérale qui forme avec la zone d'extrémité (6) du piston d'amortisseur pneumatique (3) un raccordement étanche (16); ainsi qu'une tige de piston (13), qui est raccordée de manière fixe à la zone centrale du couvercle d'amortisseur pneumatique (2) ou selon le cas au support d'amortisseur (14) et s'enfonce par glissement dans le tube réceptacle (12); un raccordement de châssis (19) ayant des points de raccordement (20, 21) avec le tube réceptacle (12) de l'amortisseur d'oscillations (11), d'une part, et au châssis, d'autre part, **caractérisé en ce que**, dans la zone plus proche (A) du raccordement du soufflet d'amortisseur pneumatique (7) au couvercle d'amortisseur pneumatique (2) est agencée une pièce articulée (22) qui permet des mouvements pivotants sous pression et ce, en formant une seconde boucle d'amortisseur pneumatique qui s'étend sensiblement dans la direction radiale et **en ce que** la pièce articulée (22) comprend le soufflet d'amortisseur pneumatique (7) et un support d'appui périphérique (24, 24', 24", 24' ") aménagé à l'intérieur de la zone d'articulation (A) sur la paroi externe du soufflet d'amortisseur pneumatique, support d'appui qui est constitué d'un matériau qui garantit, outre la fonction d'articulation, une limitation de la dilatation.

2. Système d'amortissement pneumatique selon la revendication 1, **caractérisé en ce que** le support d'appui (24") est constitué exclusivement d'un matériau élastomère ou d'un élastomère thermoplastique.

3. Système d'amortissement pneumatique selon la revendication 1, **caractérisé en ce que** le support d'appui (24) est constitué exclusivement d'un matériau textile, de préférence sous la forme d'un tissu.

4. Système d'amortissement pneumatique selon la revendication 1, **caractérisé en ce que** le support d'appui est constitué d'un matériau élastomère ou d'un élastomère thermoplastique, qui présente un support de consolidation intégré, de préférence en matériau textile.

5. Système d'amortissement pneumatique selon la revendication 1, **caractérisé en ce que** le support d'appui (24', 24"') est constitué d'un matériau élastomère ou d'un élastomère thermoplastique qui présente un support de consolidation (31, 35) appliqué sur le côté externe.

6. Système d'amortissement pneumatique selon la revendication 5, **caractérisé en ce que** le support de consolidation appliqué (31) est constitué d'un matériau textile.

7. Système d'amortissement pneumatique selon l'une quelconque des revendications 4 ou 6, **caractérisé en ce que** le matériau textile se présente sous forme entrelacée, spiralée, tissée ou tricotée.

8. Système d'amortissement pneumatique selon la revendication 5, **caractérisé en ce que** le corps de consolidation appliqué (35) est un élément d'appui annulaire.

9. Système d'amortissement pneumatique selon la revendication 8, **caractérisé en ce que** l'élément d'appui (35) est constitué de métal ou de matériau synthétique.

10. Système d'amortissement pneumatique selon la revendication 8 ou 9, **caractérisé en ce que** l'élément d'appui (35) se trouve dans une rainure externe périphérique (34) du support d'appui (24"').

11. Système d'amortissement pneumatique selon l'une quelconque des revendications 1 à 10, **caractérisé en ce que** le soufflet d'amortisseur pneumatique (7) et le support d'appui (24, 24', 24", 24,"') forment un composite total dont la face de contact commune (27) est non adhérente.

12. Système d'amortissement pneumatique selon l'une quelconque des revendications 1 à 11, **caractérisé en ce que** le moyen de fixation (28) pour l'extrémité (23) du soufflet d'amortisseur pneumatique (7) sur le couvercle d'amortisseur pneumatique (2) est en même temps le moyen de fixation pour la première extrémité (25) du support d'appui (24, 24', 24", 24"').

13. Système d'amortissement pneumatique selon la revendication 1, **caractérisé en ce que** la coulisse externe (10) est en même temps le moyen de fixation pour la seconde extrémité (26) du support d'appui (24) en serrant l'extrémité en question du support d'appui par application de pression entre le soufflet d'amortisseur pneumatique (7) et la coulisse externe.

14. Système d'amortissement pneumatique selon la revendication 1, **caractérisé en ce que** la seconde extrémité (26) du support d'appui (24, 24', 24", 24"') est fixée à la coulisse externe (10) en utilisant un moyen de fixation supplémentaire (30).

15. Système d'amortissement pneumatique selon la revendication 14, **caractérisé en ce que** la seconde extrémité (26) du support d'appui (24, 24') s'arrête exclusivement entre le moyen de fixation supplémentaire (30) et la coulisse externe (10).

16. Système d'amortissement pneumatique selon la revendication 14, **caractérisé en ce que** la seconde extrémité (26) du support d'appui (24", 24"') est un évidement continu en forme de fente pour recevoir la coulisse externe (10) et ce, en formant une extrémité interne (32) et une extrémité externe (33), l'extrémité interne se trouvant entre le soufflet d'amortissement pneumatique (7) et la coulisse externe (10), tandis que l'extrémité externe s'arrête entre la coulisse externe et le moyen de fixation supplémentaire (30).

17. Système d'amortissement pneumatique selon l'une quelconque des revendications 13 à 16, **caractérisé en ce que** la coulisse externe (10) présente, dans la zone de consolidation de la seconde extrémité (26) du support d'appui (24, 24", 24"'), une bride d'extrémité (29) orientée vers l'extérieur.

18. Utilisation du système d'amortissement pneumatique selon l'une quelconque des revendications 1 à 17 pour l'essieu avant d'un véhicule à moteur.
